(19) Europäisches Patentamt
European Patent Office
Office européen des brevets

(11) **EP 4 507 040 A1**

(12) **EUROPEAN PATENT APPLICATION**

(43) Date of publication:
**12.02.2025 Bulletin 2025/07**

(21) Application number: **24190522.3**

(22) Date of filing: **24.07.2024**

(51) International Patent Classification (IPC):
**H01M 8/1253** $^{(2016.01)}$

(52) Cooperative Patent Classification (CPC):
**H01M 8/1253; H01M 2300/0077**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.08.2023  IT 202300016806**

(71) Applicant: **Petroceramics S.p.A.
24040 Stezzano, Bergamo (IT)**

(72) Inventor: **VALLE, Massimiliano
24040 Stezzano, Bergamo (IT)**

(74) Representative: **Di Biase, Fabio
Jacobacci & Partners S.p.A.
Via Senato, 8
20121 Milano (IT)**

(54) **METHOD FOR PRODUCING AN ELECTROLYTE AND AN ELECTROLYTE**

(57)    A method for producing an electrolyte for a solid-state fuel cell, comprising a step of preparing an electrolyte suspension, wherein the electrolyte suspension comprises the following components having the following weight percentages: demineralized water: 20-28%; zirconium oxide powder: 45-55%; binder based on partially water-soluble acrylic polymers, where the binder has a solid load between 30% and 40%: 18-25%; antifoaming agent consisting of 100% silicon-free polymer: 0.1-1%; dispersing agent based on phosphoric ester dispersed in water with a solid load between 35 and 45%: 0.1-3%; plasticizing agent consisting of 100% amine-containing polymer: 0.1-1%, where the zirconium oxide powder has a D50 = 0.5 ± 0.1, and wherein the method further comprises a sintering step, so as to form an electrolyte having a thickness less than 10 μm and having D10 = 0.150 μm, D50 = 0.216 μm, D90 = 0.533 μm.

Particle Size Distribution

FIG. 1

# Description

## Field of the invention

The present invention relates to a method for producing a ceramic layer, in particular an electrolyte, for solid-state fuel cells, also known as Solid Oxide Cells (SOCs), and to a ceramic layer, in particular an electrolyte, for solid-state fuel cells.

## Background art

The efficient production of renewable energy is one of the most important challenges which humanity is facing. The need to reduce greenhouse gas emissions, combined with the constant growth of the world's population, requires the use of different alternative technologies to meet the growing energy demand. Although batteries are gaining general acceptance as a valuable storage technology for the future, they still have considerable challenges, in particular the problem of storing large amounts of energy.

An important contribution can come from the use of solid-state fuel cells. SOCs are electrochemical devices, which can convert chemical energy into electricity or reversibly store excess electrical energy, producing chemical fuels.

Using electricity from renewable sources, SOCs generate high energy, clean chemicals such as green hydrogen, ammonia or synthetic gas. Hydrogen can be used as a fuel for hydrogen vehicles or for the production of steel, ammonia for producing fertilizers, and synthetic gas for producing energy.

Moreover, the chemical reaction for producing synthetic gases requires $CO_2$, thus it contributes to the absorption of carbon dioxide. Alternatively, by feeding methane or hydrogen, the cell produces electricity. Water is the only by-product when hydrogen is used as a fuel, while carbon dioxide is produced using methane, avoiding however the production of NOx and $SO_X$.

This technology shows several strengths, such as reversible functionality, high efficiency, low cost and fuel flexibility. Moreover, SOCs are made from widely available ceramic oxide materials, such as zirconium oxide and nickel oxide.

Nevertheless, SOCs still have several critical issues. In particular, SOCs must be further developed to reduce the production costs thereof and increase the overall performance and duration thereof. In order to achieve these objectives, research is particularly focused on developing new, higher performing electrolytes with which to equip the SOCs.

Therefore, the need is felt to provide improved solid fuel cells, in particular provided with an improved electrolyte as compared to the prior art.

## Solution

It is the object of the present invention to provide a method for producing a ceramic layer, in particular an electrolyte, for solid-state fuel cells, and a ceramic layer, in particular an electrolyte, for solid-state fuel cells.

It is a particular object of the present invention to provide a method for producing an electrolyte having higher density and thus lower residual porosity as compared to the prior art.

It is a further particular object of the present invention to provide a method for producing an electrolyte having higher particle size as compared to the prior art.

These and other objects are achieved by a method for producing an electrolyte, according to the independent claims.

The dependent claims relate to preferred and advantageous embodiments of the present invention.

## Figures

In order to better understand the invention and appreciate the advantages thereof, some non-limiting exemplary embodiments thereof will be described below with reference to the accompanying drawings, in which:

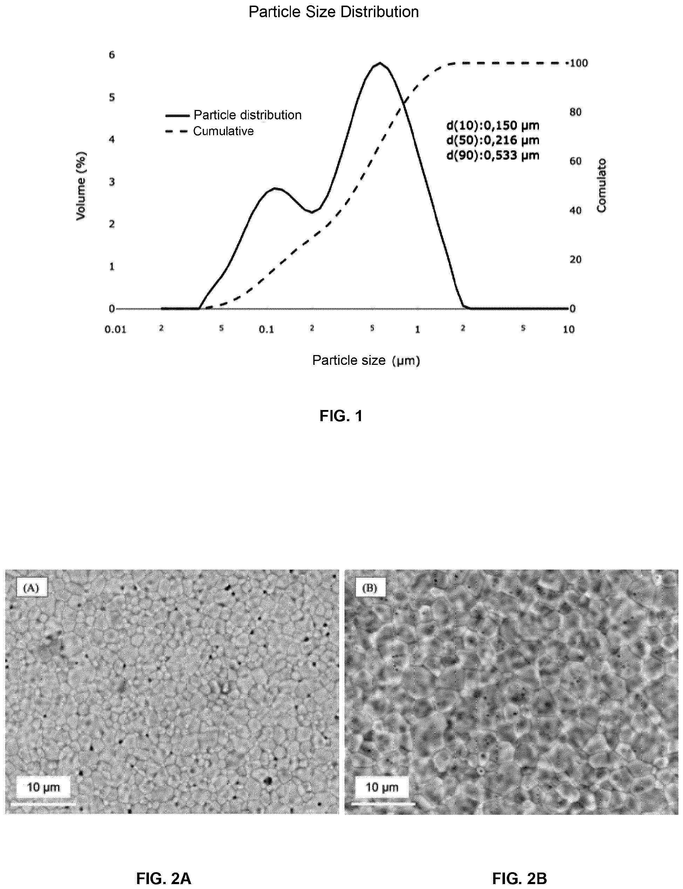

- figure 1 is a diagrammatic depiction of the particle size of the electrolyte produced by a method according to the invention, measured by means of laser diffraction;
- figure 2A is a microscope view showing the particle size of a plan microstructure of an electrolyte produced according to the prior art;
- figure 2B is a microscope view showing the particle size of a plan microstructure of an electrolyte produced by a method according to the invention.

## Description of some preferred embodiments

A method for producing a ceramic layer, in particular an electrolyte, for a solid-state fuel cell comprises a step of preparing an electrolyte suspension.

According to an aspect of the invention, the electrolyte suspension is formed by the following exhaustive list of components:

- demineralized water;
- zirconium oxide powder;
- binder based on partially water-soluble acrylic polymers, where the binder has a solid load between 30% and 40%;
- anti-foaming agent consisting of 100% silicon-free polymer;
- dispersing agent based on phosphoric ester dispersed in water with a solid load between 35 and 45%;
- plasticizing agent consisting of 100% amine-containing polymer.

The aforesaid components of the electrolyte suspension have the following percentages by weight:

- demineralized water: 20-28%
- zirconium oxide powder: 45-55%
- binder based on partially water-soluble acrylic polymers, where the binder has a solid load between 30% and 40%: 18-25%
- anti-foaming agent consisting of 100% silicon-free polymer: 0.1-1%
- dispersing agent based on phosphoric ester dispersed in water with a solid load between 35 and 45%: 0.1-3%
- plasticizing agent consisting of 100% amine-containing polymer: 0.1-1%.

Moreover, the zirconium oxide powder has a "Particle Size Distribution" ("PSD") having D50 = 0.5 ± 0.1.

Moreover, the method comprises a sintering step, after the step of preparing an electrolyte suspension but not necessarily directly after the step of preparing an electrolyte suspension, so as to form an electrolyte having a thickness of less than 10 $\mu$m and having D10 = 0.150 $\mu$m, D50 = 0.216 $\mu$m, D90 = 0.533 $\mu$m.

Advantageously, an electrolyte suspension consisting of the aforesaid components allows obtaining ceramic layers which are both thin and fully densified.

Moreover, this type of binder allows obtaining an optimally dispersed electrolyte suspension.

With further advantage, the presence of the anti-foaming agent allows adding all the ingredients forming the electrolyte suspension in a single first step, prior to a pre-milling or milling step, avoiding the formation of excessive foam.

Therefore, by means of the anti-foaming agent, it is possible to obtain an electrolyte suspension ready to be cast in a single step.

According to an embodiment, the binder consists of acrylic acids and other acrylic monomers insoluble in water, in which some carboxylic acid groups are replaced by amines which allow the binder to become partially water-soluble. The solubility thereof can be varied depending on the amount of amines present.

Advantageously, this type of binder allows obtaining ceramic layers which are both thin and fully densified.

Moreover, this type of binder allows obtaining an optimally dispersed electrolyte suspension.

According to an embodiment, the step of preparing the electrolyte suspension includes adding all the aforesaid components in a single step. Specifically, the addition of all the aforesaid components in a single step precedes a subsequent pre-milling or milling step.

Advantageously, the presence of the anti-foaming agent allows adding all the components forming the electrolyte suspension in a single first step prior to a pre-milling or milling step, avoiding the formation of excessive foam, therefore it is possible to obtain a suspension ready to be cast in a single step, preferably upon degassing. This thus allows a considerable reduction in electrolyte preparation times.

According to an embodiment, the step of preparing the electrolyte suspension comprises adding milling balls. The suspension can also be processed using a horizontal ball mill including the addition of milling balls with a diameter of 1 mm.

According to an embodiment, the milling balls are added following the addition, in a single step, of the aforesaid components forming the electrolyte suspension.

According to an embodiment, the milling balls consist of zirconium oxide and have a diameter of 2.0 mm.

According to an embodiment, the method comprises, after the step of preparing the electrolyte suspension, a step of milling the suspension.

According to an embodiment, the milling step is carried out by "ball milling" or "ball mill" or "horizontal ball mill".

The milling step is carried out for a duration of 24 h and at a speed of 40-70 rpm inside a polyethylene jar having a diameter of 200 mm or by a "horizontal ball mill". In the horizontal ball mill there are balls of yttrium-stabilized zirconium oxide with a diameter of 1.0 mm. The suspension is capable of achieving the particle size features described below after 3 hours of continuous processing. Also in this case, all the ingredients are mixed in a single initial step.

According to an embodiment, the method comprises, after the step of preparing the electrolyte suspension, a step of filtering and degassing the electrolyte suspension.

According to the embodiment in which the electrolyte suspension is milled by milling balls, following the milling step the method includes separating the electrolyte suspension from the milling balls, and then filtering and degassing the electrolyte suspension.

According to an embodiment, the method comprises, after the step of preparing the electrolyte suspension, a step of casting the electrolyte suspension, so as to form a green electrolyte layer.

According to the embodiment in which the filtering and degassing of the electrolyte suspension is carried out, after the filtering and degassing step, the method includes the step of casting the electrolyte suspension, so as to form a green electrolytic layer.

According to an embodiment, the electrolyte suspension is cast by means of "tape casting".

According to an embodiment, the method comprises, after the casting step, a step of drying the green electrolyte layer, so as to form the electrolyte. Preferably, the drying step is carried out prior to the sintering step.

Following drying and sintering, an electrolyte is obtained having a thickness less than 10 $\mu$m and having a "Particle Size Distribution" ("PSD") having the following values:

$$D10 = 0.150 \ \mu m$$

$$D50 = 0.216 \ \mu m$$

$$D90 = 0.533 \ \mu m.$$

According to an embodiment, the drying step is performed by a gradual heating from a temperature of 40 °C up to a maximum temperature value of about 80 °C.

According to a further aspect of the invention, the electrolyte produced by the method described above is adapted to be integrated in a solid-state fuel cell.

According to an embodiment, the electrolyte has a thickness less than 10 $\mu$m.

According to a preferred embodiment, the electrolyte has a thickness less than 8 $\mu$m.

Advantageously, such a reduced thickness promotes the ionic conduction of the electrolyte, which increases as the thickness of the electrolyte decreases.

According to an embodiment, the electrolyte has a "Particle Size Distribution" ("PSD") having the following values:

$$D10 = 0.150 \ \mu m$$

$$D50 = 0.216 \ \mu m$$

$$D90 = 0.533 \ \mu m.$$

Advantageously, the electrolyte has larger grains as compared to the prior art.

With further advantage, the electrolyte thus obtained is completely densified, therefore it does not have any typical residual porosity of the incomplete sintering of the prior art.

With further advantage, the electrolyte thus obtained allows obtaining better performance of the fuel cell in which it can be integrated and a more extended durability thereof.

Moreover, the electrolyte thus obtained ensures a perfect insulation of the different gases populating the two electrodes of the fuel cell during operation, preventing them from accidentally mixing, causing micro-combustion which over time leads to the delamination of the cell, decreasing the life cycle thereof.

According to a further aspect of the invention, a solid-state fuel cell comprises an electrolyte as described above.

Obviously, those skilled in the art will be able to make changes or adaptations to the present invention, without however departing from the scope of the following claims.

## Claims

1. A method for producing an electrolyte for a solid-state fuel cell, comprising a step of preparing an electrolyte suspension, wherein the electrolyte suspension consists of the following components having the following weight percentages:

   - demineralized water: 20-28%
   - zirconium oxide powder: 45-55%
   - binder based on partially water-soluble acrylic polymers, where the binder has a solid load between 30% and 40%: 18-25%
   - anti-foaming agent consisting of 100% silicon-free polymer: 0.1-1%
   - dispersing agent based on phosphoric ester dispersed in water with a solid load between 35 and 45%: 0.1-3%
   - plasticizing agent consisting of 100% amine-containing polymer: 0.1-1%,

     where the zirconium oxide powder has a D50 = 0.5 $\pm$ 0.1,
     and wherein the method further comprises a sintering step, so as to form an electrolyte having a thickness less than 10 $\mu$m and having D10 = 0.150 $\mu$m, D50 = 0.216 $\mu$m, D90 = 0.533 $\mu$m.

2. A method according to claim 1, wherein the binder consists of acrylic acids and acrylic monomers insoluble in water, in which carboxylic acid groups are replaced by amines, so as to allow the binder to become partially water-soluble,
   and wherein the binder solubility varies depending on the amount of amines present.

3. A method according to claim 1 or 2, wherein the step of preparing the electrolyte suspension comprises adding the components in a single step, prior to a milling or pre-milling step.

4. A method according to claim 3, wherein the step of preparing the electrolyte suspension comprises, upon addition of the components in a single step, the addition of milling balls consisting of zirconium oxide and having a diameter of 1.0 mm or 2.0 mm, and wherein the method comprises, after the step of preparing the electrolyte suspension, a step of milling the suspension by:

   - "ball milling", for a duration of 24 h and at a speed of 40-70 rpm inside a polyethylene jar having a diameter of 200 mm, and where the milling balls consist of zirconium oxide and have a diameter of 2.0 mm,
or
- milling with a "horizontal ball mill", where there are balls of yttrium-stabilized zirconium oxide with a diameter of 1.0 mm, for a duration of 3 hours of continuous processing.

5. A method according to any one of the preceding claims comprising, after the milling step, a step of filtering and degassing the electrolyte suspension.

6. A method according to claim 5 comprising, after the filtering and degassing step, a step of casting the electrolyte suspension by "tape casting", so as to form a green electrolyte layer.

7. A method according to claim 6 comprising, after the casting step, a step of drying the green electrolyte layer and a step of sintering the green electrolyte layer, so as to form an electrolyte having a thickness less than 10 $\mu$m and D10 = 0.150 $\mu$m, D50 = 0.216 $\mu$m, D90 = 0.533 $\mu$m,
and wherein the drying step is performed by a gradual heating from a temperature of 40 °C up to a maximum temperature value of 80 °C.

8. An electrolyte produced by a method according to one of the preceding claims, wherein the electrolyte has a thickness less than 10 $\mu$m, or less than 8 $\mu$m, and wherein the electrolyte has D10 = 0.150 $\mu$m, D50 = 0.216 $\mu$m, D90 = 0.533 $\mu$m.

9. A solid-state fuel cell, comprising an electrolyte according to claim 8.

## Particle Size Distribution

FIG. 1

FIG. 2A

FIG. 2B

Europäisches
Patentamt

European
Patent Office

Office européen
des brevets

# EUROPEAN SEARCH REPORT

Application Number

EP 24 19 0522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 087 239 A (SHENHUA NEW ENERGY CO LTD; UNIV CHINA MINING & TECHNOLOGY BEIJING) 1 May 2020 (2020-05-01) | 8,9 | INV. H01M8/1253 |
| A | * claim 10 *<br>* paragraph [0002] *<br>* example 5 *<br>- - - - - | 1-7 | |
| X | CN 111 384 421 A (JIANGXI SAICI MAT CO LTD) 7 July 2020 (2020-07-07) | 8,9 | |
| A | * claim 4 *<br>* paragraphs [0044], [0045], [0057] *<br>- - - - - | 1-7 | |
| A | N.N.: "A basic guide to particle characterization",<br>,<br>1 January 2015 (2015-01-01), XP093118075,<br>Retrieved from the Internet:<br>URL:https://www.cif.iastate.edu/sites/defa ult/files/uploads/Other_Inst/Particle%20Si ze/Particle%20Characterization%20Guide.pdf<br>[retrieved on 2024-01-11]<br>* p. 11: table and last paragraph *<br>- - - - - | 1-9 | |

**TECHNICAL FIELDS SEARCHED (IPC)**

H01M

The present search report has been drawn up for all claims

| Place of search | Date of completion of the search | Examiner |
|---|---|---|
| Munich | 28 November 2024 | Gregori, Giuliano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 0522

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2024

| Patent document cited in search report | | Publication date | Patent family member(s) | Publication date |
|---|---|---|---|---|
| CN 111087239 | A | 01-05-2020 | NONE | |
| CN 111384421 | A | 07-07-2020 | NONE | |

EPO FORM P0459

For more details about this annex : see Official Journal of the European Patent Office, No. 12/82